# EUROPEAN PATENT APPLICATION

(11) **EP 0 676 561 A1**
(43) Date of publication of application: **11.10.1995**
(21) Application number: 94302490.1
(22) Date of filing: 08.04.1994
(51) Int. Cl.: F16H 3/00, F16H 35/10

(54) **The differential motion gear system to control the speed ratio by means of the change of input direction**

(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Arthur, Bryan Edward

(57) **Abstract**

The present invention refers to a kind of differential motion gear system to control the speed ratio by means of the change of input direction, it is to cause the conversion of the output speed ratio by changing the revolving direction of the input axis of the differential motion gear system to obtain the one structure multiple sets of series stages application with invariable or variable output direction, or the differential motion gear system of the specific structure providing mixed series stages application of the above two ways.

## Description

### SUMMARY OF THE INVENTION :

The present invention refers to a kind of differential motion gear system to control the speed ratio by means of the change of input direction, it is to cause the conversion of the output speed ratio by changing the revolving direction of the input axis of the differential motion gear system to obtain the one structure multiple sets of series stages application with invariable or variable output direction, or the differential motion gear system of the specific structure providing mixed series stages application of the above two ways.

### BRIEF DESCRIPTION OF THE DRAWINGS :

Figure 1 is the schematic drawing of the fundamental principle of the structure of the differential motion gear system to control the speed ratio by means of the change of input direction.

Figure 2 is the schematic drawing of the embodiment of the differential motion gear system to control the speed ratio by means of the change of input direction to use the external gear as the input axis.

Figure 3 is the schematic drawing of the application of the differential motion gear system to control the speed ratio by means of the change of input direction to use the driving arm of the differential gear to drive the input axis directly.

Figure 4 is the schematic drawing of the application of the differential motion gear system to control the speed ratio by the change of the input direction to combine the external gear with the input axis.

Figure 5 is the schematic drawing of the embodiment of the scries type quick-return differential motion gear system to control the speed ratio by means of the change of input direction.

Figure 6 is the schematic drawing of the embodiment of the parallel type quick-return differential motion gear system to control the speed ratio by means of the change of input direction.

Figure 7 is the schematic drawing of the embodiment of the double-acting type quick-return differential motion gear system to control the speed ratio by means of the change of input direction.

### DETAILED DESCRIPTION OF THE INVENTION :

The present invention refers to a kind of differential motion gear system to control the speed ratio by means of the change of input direction, it is to cause the conversion of the output speed ratio by changing the revolving direction of the input axis of the differential motion gear system to obtain the one structure multiple sets of series stages application with invariable or variable output direction, or the differential motion gear system ofthe specific structure providing mixed series stages application of the above two ways.

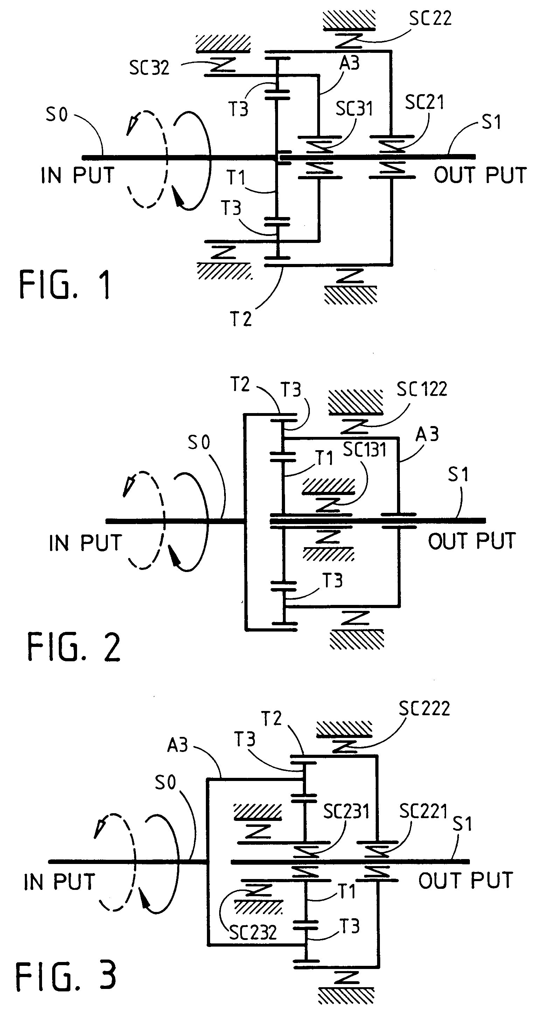

Figure 1 is the schematic drawing of the fundamental principle of the structure of the differential motion gear system to control the speed ratio by means of the change of input direction comprising chiefly:
-- The input solar gear T1 to couple with the differential motion gear T3 and combinding with the input axis S0;
-- The differential motion gear T3 to be constituted by one or more sets of gears, it is coupled between the solar gear and external gear, the driving arm A3 to be dragged by the differential motion gear driven output axis S1 via the one-way driving mechanism SC31 and couples with the still case via one set of reverse one-way driving mechanism SC32;
-- The external gear T2 to be coupled with the differential motion gear T3 and coupled with the output axis S1 via one set of one-way driving mechanism SC21, and coupled with the still case via one set of reverse one-way driving mechanism SC22;
-- The above one-way driving mechanisms SC21 and SC31 allow to couple with the output axis S1 in parallel in the same direction, or encase on the output axis S1 coaxially as internal gear and external gear; the one-way driving mechanisms SC22 and SC32 to installed between the rocker arms of the external gear and the differential motion gear and the still case operate on same direction and against the direction the above SC31 and SC32, and they allow to be installed in parallel to or encased coaxially between the still case and the rocker arms to be driven by the external gear and the differential gear.

Based on the above structure, taking the example of the selective design of that in the one-way driving mechanism of the external gear, differential motion gear and the still case, the former idles clockwise, and it is able to drive clockwise by coupling with the output axis S1, the differential motion stystem to control the speed ratio by chaning input direction may form the following two kinds of output state :
A. While the input axis S0 revolves clockwise (CW), on account of counterelockwise torsion of the external gear is restricted by the one-way driving mechanism SC22, the driving rocker arm of the differential motion gear drives the output axis S1 clockwide via one-way driving mechanism SC31, the speed ratio is :$\text{R = 1 + T2 / T1;}$
B. While the input axis S0 revolves counterwise (CCW), on account of the counterclockwide torsion of the driving rocker arm of the differential motion gear is restricted by the one-way driving mechanism SC32, the external gear drives the output axis clockwise via the one-way driving mechanism SC21, the speed ratio is :$\text{R = - T2 / T1 .}$

Based on the above fundamental principle, there are multiple practical embodiments including to use the solar gear, or differential motion gear or external gear as the input axis, andthe other two gears of the above three gears will be coupled betwee the output axis and the still case via the one-way driving mechanism based on the above principle, for example:

As shown in Figure 2, the embodiment by using the external gear as the input axis has the main structural relationship as follows:
-- The external gear T2 is connected with the input source to input reciprocally;
-- The solar gear T1 and the differential motion gear T3 drive mutually and couple with the output axis S1 via the one-way driving mechanism SC131;
-- The driving rocker arm A3 of the differential motion gear set T3 is coupled to rotate with the output axis S1 (or encased coaxially in circular shape), an one-way driving mechanism SC122 is installed between the rocker arm A3 and the fixed case (or encased coaxially in circular shape), and the acting direction is the same that of the one-way driving mechanism SC131 of the solar gear T1 to be coupled with the output axis;
-- The relationship of output is that on the first rotating direction, the rocker arm A3 to be driven by the differential motion gear T3 is restricted to stand still by the one-way driving mechanism SC122 between the differential motion gear T3 and the still case. The output axis S1 is driven by the solar gear T1 via the one-way drivign mechanism SC131, the output ratio will be :$\text{R = - T1 / T2;}$
-- While the input axis S0 rotates reversely, the solar gear T1 is restricted by the one-way driving mechanism SC131 between itself and the fixed case, by this time the output axis S1 is driven by the driving rocker arm A3 of the differential gear T3, the output ratio will be :$\text{R = 1 + T1/ T2;}$

Owing the reversal driving direction, the output will always be on the same direction in both obverse and reverse input of the driving gear.

Figure 3 shows an example of the application of the driving rocker arm of the differential motion gear to drive the input axis directly, the main structural relationship relationship will be :
-- The driving rocker arm A3 of the differential motion gear T3 is coupled with the bidirectional input power source to input reciprocally;
-- The solar gear set T1 and external gear set T2 are coupled with the output axis S1 via one set of one-way driving mechanisms SC231 and SC221 respectfully (or the two sets of one-way driving mechanism to be encased coaxially in circular shape), and the one-way driving mechanisms SC232 and SC222 are installed between the above solar gear T1 and external gear T2, and the fixed case (or the two sets of one-way driving mechanism are encased coaxially in circular shape), the acting direction will be reverse to the one-way driving mechanisms SC231 and SC221 to be to be couple with the output axis;
-- The replationship of output is that on the first rotating direction, the solar gear T1 is stricted to stand still by the one-way driving mechanism SC232 to be installed between the solar gear and the fixed case, by this time the output axis S1 is driven by the one-way driving mechanism SC221 to be instilled between the output axis S1 and the external gear T2, the output ratio will be :$\text{R = 1 / (1 + T2/T1);}$
-- While the input axis S0 drives reversely, the external gear T2 is restricted to stand still by the one-way driving mechanism SC222 to by instilled between the external gear and the fixed case, by this time the output axis S1 is driven by the one-way driving mechanism SC231 to be installed between the solar gear T1 and the output S1, the output ration will be:$\text{R = 1 / (1 + T1/T2).}$

Figured 4 shows an example of application of the external gear to be combines with the outpur axis, the main structural relationship will be:
----The driving rocker arm A3 of the differential motion gear T3 is coupled with the case via the one-way driving mechanism SC422;
----The input axis S0 combines with and drives the solar gear T1 to perform reciprocal rotary motive force input, and it is coupled with the external gear T2 and the output axis via S1 the one-way driving mechanism SC421;
----The solar gear T1 is engaged with the differential motion gear T3 and combined with the input axis S0;
----The relationship of output will be that on the first rotating direction, the external gear T2 and the output axis S1 is driven by the one way driving mechanism SC421 to be installed between the output axis S1 and the input axis S0, by this time the one-way driving mechanism SC422 to be installed between the rocker arm A3 of the differential motion gear will idle, the output ratio at this state will be:$\text{R = 1 ;}$
----While the input axis S0 rotates reversely, the one-way driving mechanism SC421 between the external gear T2 and the input axis S0 will be idle, and the one-way driving mechanism SC422 to be installed the rocker arm A3 of the differential motion gear and the case will be in the state of locking up, by this time the different motion gear system will be in the state to output by the external gear T2, the output ratio at this state will be:$\text{R = -T1/T2.}$

The present invention provides further an innovative quick-return differential motion gear system to switch the driving direction of the driving side and change the output speed ratio as well sd the rotating direction simultaneously so that the driving axis will rotate obversely ab\nd reversely in unequal speed ratio to improve the convenience and quick-return motion efficiency of mechanism.

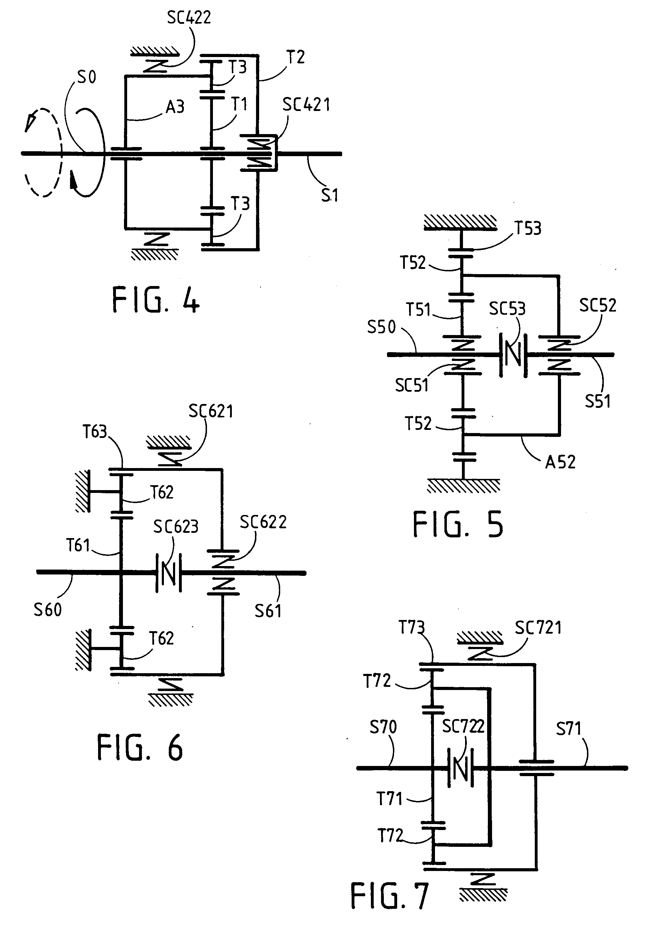

The embodiment of the quick-return differential motion gear system is fdivided into (A) series type, (B)parallel type and (C) double-acting type based on the distribution of the one-way driving mechanism of the structural components, it is explained based on the embodiment as follows:
(A) Series type: Figuer 5 shows the schematic drawing of the embodiment of the series type quick-return differential motion gear system to control the speed ratio by changing the input direction, it is constituted chiefly as follows:
   ----The input axis S50 to be coupled with and input oberse and reverse rotating power to the quick-return differential motion gear system as the source of the oberse and reverse driving force;
   ----The solar gear T51 to have the rotating force to be couple with the input axis S50 via the one-way driving mechanism SC51 and engaged with the differential gear set T52;
   ----The differential gear T52: The driven arm A52 is coupled with the output shaft S51 via the driving mechanism SC52 and engaged with the external gear T53.
   ----The external gear T53 in the shape of inner circular gear to be engaged with differential motion gear and coupled with the fixed case;
   ----The one-way driving mechanism SC53 to be installed between the input axis S50 and the output axis S51;
   ----The relationship of acting-direction allowing to convey motive force of the above one-way driving mechanism SC53 will be to convey motivn force while SC51 and SC52 are on the first to be departed on driving reversely, and SC53 conveys motive force while it drives on another direction;
   ----Other structural components of the accustomed gear box relating to the case , screws, ect. are not described otherwise herein.
(B) Parallel type: The parallel type quick-return gear system to control speed ratio by changing the input direction as shown in the schematic drawing in Figure 6, the main structure inclndes:
   ----The input axis S60 to be coupled with the quick-return differential motion gear system to input oberse and reverse rotating force;
   ----The solar gear T61 to be connected to the input axis S60 and coupled with differential motion gear T62;
   ----The differential motion gear T62 to be coupled with the solar gear T61 and the external gear T63 are fixed on the case;
   ----The external gear T63 to be coupled with the differential motion gear T62 and drives the output axis S61 by means of the conveying of motive force of the one-way driving mechanism SC622, and it is coupled with the case by means of another set of one-way driving mechanism SC621 to rotate or restricted to stand still in different thrust directions;
   ----The one-way driving mechanism SC623 to be installed betweem the input axis S60 and output axis S61;
   ----The relationship of the acting-direction of the above one-way driving mechansim SC623 to convey motive force is that on the first driving direction, SC621 cause the eaternal gear T63 to rotate freely, SC622 cause the output axis S61, and SC623 cause idle rotating between the input axis S60 and the output axis S61; on the second driving direction, SC621 causes the external gear to be restricted and stand still, SC623 cause the input axis to be combined with the output axis, and SC622 causes idle rotating between the output axis and the external gear;
   ----Other related structural components of the accustomed gear box of the case, screw, ect. are not described herein otherwise.
(C) Double-acting type : The embodiment of the double-acting type quick-return differential motion gear system to control the speed ratio by chamging the input direction as show in the schematic drawing in Figure 7 is constituted chiefly by:
   ----The input axis S70 to be couple with the quick-return Differential motion gear system for the input of reciprocal rotary motive force as the source of reciprocal rotating, and couple with the output axis S71 via the one-way driving mechanism SC722;
   ----The Solar gear T71 to be connected to the input axis S70 and coupled with the differential motion gear T72;
   ----The differential motion gear T72 to ve couple with the solar gear T71 and the external gear T73, the spindles of various differential motions gears are installed on the driving rocker arm jointly to drive the output axis S71, and coupled with the input axis S70 via the one-way driving mechanism SC722;
   ----External gear T73: It is coupled with the differential gear T72 and then coupled with the fixed case via the one-way driving mechanism SC721 to rotate or being restricted to stand still in different stressed directions.
   ----The one-way driving mechanism SC722 to be installed between the input axis S70 and the output axis S71;
   ----The relationship of the acting-direction to convey motive force of the above one-way driving mechanism is that SC721 cause the external gear T73 to rotate freely on the first driving direction, and SC722 causes the conveying of motive force between the input axis S70 and the output axis S71; SC721 causes the external gear to be restricted to stand still on the second driving direction, SC722 causes the input axis and the output axis to rotate idly. By this time the output axis is driven by the differential motion gear and the driving rocker arm to porform reduction output;
   ----Other related structural components of the accustomed gear box of the cause and screws are not described herein otherwise.

The differential motion gear system to control speed ratio by changing the input direction allows to combine further automatic load sensor to control the reciprocal rotating of the driving source of the driving axle to change the output speed ratio, i.e., excepting artificial switching the rotating direction of the source of the rotating motive force, it allows to detect further the load current of the source of motive force for the reference of the time to convert the direction; it is generally to detect the load current of the motor to convert the direction of the rotating of the motor while the load current exceeded the setting conditions to convert the differential motion gear system to control speed ratio by changing input direction from one state into another state, these states comprise the change from smaller speed ratio, or compring further simultaneous conversion of the output drirection, in addition, the detecting method comprises also to use mechanical torsion sensor as the basis of control and detection; if the driving side has the load of other motive force, such as, engine, the direction converting mechanism may be driven on overloading by combing it with torsion sensor or restricting device to change the rotating direction of the input of the differential motion gear system.

In practical application, the following options are avialable:
----To berapplied for friction differential motion gear system, the related relationship is also thesame.
----To combine cenventional reciprocal mechanism on the input or output end will be able to get the variable output with bidirectional invariable speed ratio.
----The application of one kind of multiple sets series stages or two kinds of structure mixed series stages to constitute multiple sets multiplied speed ratio by the structure of same input with different speed ratio conversion to be produced by different input conversion and the structure of different output conversion with different output speed ratio.

In summary, the innovative differential motion gear system to control speed ratio by changing the input direction shows the output in same output direction with different speed ratio or the output in different direction with different speed ratio to be produced by the reciprocal driving of a differential motion gear system at the side of driving force, it allows to be applied for various driving with the one kind of the structure of multiple sets of series stages or the mixed stages of the above two ways.

## Claims

1. One kind of different motion gear system to control the speed ratio by changing the input direction to convert the output speed ratio to get invariable or variable output direction via the change of the conversion of the input axis of the differential motion gear system by the application of the one kind structure multiple sets of series stages or the application of the mixed series stages of the above two ways.

2. The different motion gear system to control speed ratio by changing the input direction as stated in Claim 1 comprising chiefly;
----An input solar gear T1 to be coupled with the differential motion gear T3 and combined with the input axis S0;
----A different motion gear T3 to be constituted by one or more sets of differential motion gears to be coupled between the solar gear and external gear with the driving rocker arm A3 to drive output axis S1 via the one-way driving mechanism SC31 and couple with the fixed case via one set of reversal one-way driving mechanism SC32;
----An external gear T2 to be coupled with the differential motion gear T3 and then coupled with the output axis S1 via one set of one-way driving mechanism SC21, and couple with the fixed case via a reversal one-way driving mechanism SC22;
----In the above one-way driving mechanism allowing SC21 and SC31 to coupled with the output axis S1 in parallel in same direction, or encased on the output axis S1 axially in the shape of inner and outer rings; in addition the one-way driving mechanisms SC22 and SC32 to be installed between the external gear and the fixed case and the rocker arm of the differential gear and the fixed case to be in same acting direction and in reversal direction of the above SC31 and SC32 in the way of being installed in parallel respectfully or being encased between the fixed case and the external gear as well as the fixed case and the rocker arm to be driven by the differential motion gear coaxially in the shape of inner and outer rings;
By means of the above structure, taking the example of the one-way driving mechanism from the external gear and the differential motion gear to the fixed case being selected to be that the former rotated idly clockwise and the direction to be coupled with the output axis S1 to drive clockwise, the differential motion gear system to control speed ratio by changing input direction allowing to be in the states of the following two kinds of output:
A. While the input axis S0 rotates and drives clockwise(CW), on account of the torsion of the external gear toward the counterclockwise direction is restricted by the one-way driving mechanism SC22, the rocker arm of the differential gear drives clockwise and it drives the output axis S1 via the one-way driving mechanism SC31, the speed ratio is:$\text{R = 1 + T2/T1 ;}$
B. While the input axis S0 rotates and drives counterlockwise(CCW), owing to the counterclockwise torsion of the differential motion gear being restricted by the one-way driving mechanism SC32, the external gear drives the output axis clockwise via the one-way driving mechansim SC21, the speed ratio being:$\text{R = -T2/T1.}$

3. The differential motion gear to control speed ratio by changing the input direction as stated in Claim 1 allowing to use further the external gear as the axis, the main structural features comprising:
----An external gear T2 to be connected to the source of input to input reciprocally;
----A solar gear T1 to drive mutually with the differential motion gear T3 and coupled with the output axis S1 by means of the one-way driving SC131;
----A driven rocker arm A3 of the differential motion gear set T3 to be couple to rotate with the output axis S1(or encase coaxially in circular shape), an one-way driving mechanism SC122 being installed between the rocker arm and the fixed case(or encased coaxially in circular shape), and the acting direction being the same as that of the one-way driving mechanism SC131 to be couple between the solar gear T1 and the output axis;
----The output relationship being that on the first rotating direction, the rocker arm A3 to be driven by the differential motion gear T3 being restricted to stand still by the one-way driving mechanism SC122 between the rocker arm and the still case, the output axis S1 being driving by the solar gear T1 via the one-way driving mechanism SC131, the output ratio being:$\text{R = -T1/T2;}$
----While the input axis S0 rotates reversely, the solar gear T1 being restricted by the one-way driving mechanism SC131 between itself and the fixed case, the output axis S1 being driven by the driving rocker arm A3 of the differential motion gear T3 output ratio being:$\text{R = 1 + T1/T2}$

4. The differential motion gear system to control speed ratio by changing the input direction as stated in Claim 1 allowing further to drive the input axis directly the input axis directly by the driving rocker arm of the differential motion gear, where in the main structural features comprising:
----The driving rocker arm A3 of the differential motion gear T3 combining with the source of the motive force of the bidirectional input to input reciprocally;
----The solar gear set T1 and external gear set T2 being coupled with output axis S1 respectfully via one set of same direction one-way driving mechanisms SC231 and SC221(or coaxially encasing in circular shape of the two sets of one-way driving mechanism), or installing one-way driving mechanisms SC232 and SC222 between the above solar gear T1 and the fixed case as well as the external gear T2 and the fixed case respectfully(or coaxially encasing in circular shape of the two sets of one-way driving mechanisms), the acting direction being reverse to the one-way driving mechanisms of SC231 and SC221 to be coupled with the output axis;
----The relationship of output being that on the first rotating direction, the solar gear T1 being restricted to stand still by the one-way driving mechanism SC232 to be installed between the solar gear and the fixed case, the output axis S1 being driven by the one-way driving mechanism to be installed between the output axis S1 and the external gear T2, the output ratio being: 5$\text{R = 1/(1+T2/T1);}$
----While the input axis S0 drives reversely, the external gear T2 being restricted to stand still by the one-way driving mechanism SC222 to be installed between the external gear and fixed case, the output axis S1 being driven by the solar gear T1 via the one-way driving mechanism SC231 to be installed between the output axis S1 and the solar gear T1, the output ratio being:$\text{R = 1/(1+T1/T2).}$

5. The differential motion gear system to control speed ratio by changing the input direction as stand in Claim 1 allowing further the application to combine the external gear with the output axis, the main structural relationship comprising:
----The driving rocker arm A3 of the differential motion gear T3 to be coupled with the case via the one-way driving mechanism SC422;
----The input axis S0 to be used to combine with and driven the solar gear T1 for the input of reciprocal rotary motive force; and coupled with the external gear T2 and output axis S1 via the one-way driving mechanism SC421;
----The solar gear T1 to be engaged with the differentinal motion gear T3 and combined with the input axis S0 ;
----The relationship of output being that on the first rotating direction, the external gear T2 and input axis S1 being driven by the one-way driving mechanism SC421 between the output axis S1 and the input axis S0, and the one-way driving mechanism SC422 to be installed between the rocker arm A3 of the differential motion gear and the case being idle, the output ratio of this state being:$\text{R = 1 ;}$
----While the input axis S0 rotating, the one-way driving mechanism SC421 between the external gear T2 and input axis S0 being idle, the one-way driving mechanism SC422 to be installed between the rocker arm A3 of the differential motion gear and the case being in the state of looking up, and the differential motion gear system being in the state to output by the external gear T2, the output ratio in the state being:$\text{R = -T1/T2.}$

6. The differential motion gear system to control speed ratrio by changing the input direction as stated in Claim 1 providing further a kind of differential motion gear system to rotate reciprocally relative to the reciprocal rotation of the driving axis in unequal speed ratio; the embodiment being divided into (A)series type, (B)parallel type, and (C)double-acting type in accordance with the distribution of the one-way driving mechanism in the components of structure, where in:
(A) The series type being consituted cheifly by:
----An input axis S50 to be couple with and drive the source of motive force reciprocally as well as input reciprocal rotary motive force to the quick-return differential motion gear system;
----A solar gear T51 providing the rotary motive force to be coupled with the input sxis S50 via one-way driving mechanism SC51 and engaged with the differential motion gear set T52;
----A differential motion gear T52 to be coupled with the output axis S51 via the one-way driving mechanism SC52 and engaged with the external gear T53;
----An external gear T53 to form circular inner to engage with the differential gear and coupled with the fixed case by itself;
----An one-way driving mechanism SC53 to be installed between the input axis S50 and the output axis S51;
----The acting direction to convey motive force of the above one-way driving mechanism SC53 being to convey motive force while SC51 and SC52 are in the first driving direction simultaneously, and in the state of departing while SC51 and SC52 drive reversely, and SC53 drives in another direction to convey motive force;
----Other components of accustomed gear box relating to case, screw, etc.;
(B)The parallel type being constituted cheifly by:
----An input axis S60 to be coupled with the source of motive force for reciprocal rotation and input reciprocal rotary motive force to quick-return differential motion gear system;
----A solar gear T61 to be connected with the input axis S60 and coupled with the differential motion gear T62;
----A differential motion gear T62 to be coupled with the solar gear T61 and the external gear T63, the spindle of various sets of differential motion gears being fixed on the case;
-----An external gear T63 to be coupled with the differential motion gear T62 and drive the output axis S61 by means of the convey of motive force of one-way driving mechanism SC622 and coupled with the fixed case by means of another set of one-way driving mechanism SC621 to rotate or being restricted to stand still in different thrust direction;
----An one-way driving mechanism SC623 to be installed between the input axis S60 and output axis S61;
----The relationship of the acting-direction of the conveying of motive force of the above one-way driving mechanism SC623 being that SC621 causes the external gear T63 to rotate freely and SC622 cause the motive force of the external gear to be conveyed to the output axis S61 and SC623 causes idling between the input axis S60 and output axis S61 in the first driving direction; and SC621 causes the external gear to be restricted and stand still, SC623 causes the input axis to be combined with the output axis and SC622 causes idling between the output axis and external gear in the second driving direction;
----Other related components of accustomed gear box, such as, the case, screw, ect.
(C)The double-acting type being constituted cheifly by:
----An input the source axix S70 to be coupled with the source of rotary reciprocal motive force to input reciprocal rotary motive force to the quick-return differential motion gear system and coupled with the output axis S71 via the one-way driving mechanism SC722;
----A solar gear T71 to be connected to the input axis S70 and coupled with the differential motion gear T72;
----A differential motion gear T72 to be coupled with the solar gear T71 and external gear T73, the spindles of various differential motion gears being installed on the driving rocker arm jointly to drive the output axis S71, and coupled with the input axis S70 via the one-way driving mechanism SC722;
----An external gear T73 to be coupled with the differential motion gear T72 and coupled with the fixed case via the one-way driving mechanism SC721 to rotate or being restricted to stand still in different thrust directions;
----An one-way driving emchanism SC722 to be installed between the input axis S70 and output axis S71;
----The relationship of the acting-direction of the above one-way driving mechanism to convey motive force that the SC721 causes the external gear T73 to rotate freely and SC722 causes the conveying of motive force between the input axis S70 and output axis S71 in the first driving direction; and SC721 causes the external gear to be restricted and stand still, SC722 causes the input axis and output axis to be idle, and the output axis S71 being driven by the driving rocker arm via the differential motion gear to perform reduction output.
----Other related components of accustomed gear box, such as, the case, screws, ect.

7. The differential motion gear system to control the speed ratio by changing the input direction as stated in Claims 1, 2, 3, 4, 5 and 6 combining further an automatic load sensor to control the driving source of the driving axis to change the output speed ratio, i.e., excepting to convert direction by manual conversion of the source of rotating motive force, the detecting of the load current of the source of motive force being used for the reference of the time to convert direction. The load current of motor being generally uasd for detection to convert the direction of the motor on the exceeding of specifid conditions of the load current to have the differential motion gear system to control speed ratio by changing the input direction to turn form one state into another state into another state, these states comprising to change thespeed ratio from smaller to bigger or from bigger to smaller (or converting the output direction simultaneously), in addition, the way of the detection of load comprising to use mechanical torsion sensor in the above control and detection; if the driving side has other motive force to be the load, such as, engine, ect., torsion dtection or restricting device may be combined to drive the direction conversion mechanism to convert the rotating direction mechanism to convert the rotating direction of the differential motion gear system on overloading.

8. The differential motion gear system to control the speed ratio by changing input direction as stated in Claims 1, 2, 3, 4, 5, and 6 allowing to be applied to friction differential motion gear system, the related relationship being the same as above.

9. The differential motion gear sysytem to control speed ratio by changing input direction as stated in Claims 1, 2, 3, 4, 5, and 6 allowing to combine further conventional reciprocal rotating mechanism with the input or output end to obtain the variable output with bidirection different speed ratio.

10. The differential motion gear system to control speed ratio by changing input direction as ststed in Claimed 1, 2, 3, 4, 5, and 6 allowing further the structure to produce same output rotating direction with different output speed ratio by means of different input rotating direction, and the structure to produce different output rotating direction with different output speed ratio, wherein one kind of multiple sets series stages or tow kinds of structure being mixed and connected in series to constitute multiple sets multiplied speed ratio in application.
